# EUROPÄISCHE PATENTSCHRIFT

(11) **EP 0 889 567 B1**
(45) Veröffentlichungstag und Bekanntmachung des Hinweises auf die Patenterteilung: **30.07.2003**
(21) Anmeldenummer: 98111638.7
(22) Anmeldetag: 24.06.1998
(51) Int. Cl.: H02G 3/30, H02G 3/04

(54) **Kabelverlegesystem**
Cable installation system
Système d'installation de câble

(30) Priorität: 02.07.1997 DE 19728224
(43) Veröffentlichungstag der Anmeldung: 07.01.1999
(73) Patentinhaber: OBO Bettermann GmbH & Co. KG., 58710 Menden (DE)
(72) Erfinder: Broszukat, Peter Dipl.-Ing.,, D-58708 Menden (DE)
(74) Vertreter: Köchling, Conrad, Dipl.-Ing.

(56) Entgegenhaltungen:
- DE-U- 7 014 140
- FR-A- 2 489 613

## Beschreibung

Die Erfindung betrifft ein Kabelverlegesystem bestehend aus Kabelschellen, die an einer Befestigungsebene (z.B. Wand oder Decke) befestigt sind, sowie Rohren, die von den verlegten Kabeln axial durchsetzt sind und in die Kabelschellen mit gabelartigem Rohrauflager eingerastet oder eingeklipst sind.

Derartige Kabelverlegesysteme sind im Stand der Technik bekannt (DE-U-7014140).

Die Verlegung von Kabeln erfolgt in der Weise, daß zunächst gabelartige Kabelschellen mit ihrer Basis an einer Befestigungsebene befestigt werden, beispielsweise an einer Wand oder Deckenfläche oder auch an einem Träger oder einem sonstigen gestellfesten Bauteil. Die Schellen sind mit der Öffnung ihrer gabelförmigen Aufnahme dabei gleichgerichtet. In die Schellen kann dann ein entsprechendes Rohr eingeklipst werden oder eingeklemmt werden. Die zu verlegenden Kabel können dann durch das Rohr hindurchgeschoben werden oder auch durch das Rohr durchgezogen werden. Der Verlegeaufwand ist erheblich, wobei insbesondere das Durchschieben oder Durchziehen der Kabel durch die Rohre sehr zeitaufwendig ist. Insbesondere in Eckbereichen, in denen entweder gebogene Rohrstücke als Verbindungselemente zwischen geraden Rohrabschnitten angeordnet sind oder aber die frei von Rohrabschnitten sind, so daß in Eckbereichen die geraden Rohrstücke Abstand voneinander aufweisen, ist die Verlegung aufwendig und schwierig.

Ausgehend von diesem Stand der Technik liegt der Erfindung die Aufgabe zugrunde, ein Kabelverlegesystem gattungsgemäßer Art zu schaffen, welches eine einfache und sachgerechte Installation von Kabeln in den entsprechenden Rohrabschnitten ermöglicht, wobei dennoch eine sichere Anordnung der Kabel in den Rohren gewährleistet ist.

Zur Lösung dieser Aufgabe schlägt die Erfindung vor, daß jedes Rohr einen durchgehenden Längsschlitz aufweist und daß das Rohr in den Kabelschellen drehbar gehalten ist.

Bevorzugt ist vorgesehen, daß der Längsschlitz eine Schlitzweite hat, die dem Durchmesser eines eingelegten Kabels entspricht oder gering kleiner oder größer ist als der Kabeldurchmesser.

Desweiteren ist bevorzugt, daß der lichte Innendurchmesser des Rohres ein Vielfaches des Durchmessers der eingelegten Kabel beträgt.

Durch die erfindungsgemäße Ausbildung ist es möglich, das in den Kabelschellen gehalterte Rohr zum Zwecke des Einlegens von Kabeln in eine Lage zu drehen, in der der Längsschlitz zugänglich ist, so daß die entsprechenden Kabeln oder auch ein entsprechendes Kabel in den Längsschlitz eingelegt und in das Rohr eingebracht werden kann. Anschließend kann das Rohr in den Kabelschellen in eine Lage verdreht werden, in der der Schlitz von Elementen der Kabelschelle im Bereich der Anordnung der Kabelschellen verdeckt ist, wobei das Rohr in eine solche Lage gedreht wird, daß der Längsschlitz nicht in Richtung der Erdschwere nach unten weist, um zu vermeiden, daß die in dem Rohr befindlichen Kabel oder dergleichen zwischen den Kabelschellen durchhängen und aus dem Rohr austreten.

Um die sichere Anordnung von eingelegten Kabeln noch zu verbessern, wird vorgeschlagen, daß an mindestens einer Längsrandkante des Rohres ein Rohrsegment anscharniert oder angelenkt ist, welches in eine den Längsschlitz freigebende Zuführlage und in eine den Längsschlitz schließende, das Rohr zu einem geschlossenen Rohr ergänzende Lage schwenkbar ist

Bevorzugt ist vorgesehen, daß das an einer Längsrandkante des Rohres angelenkte Rohrsegment an seiner der Anlenkstelle abgewandten Randkante eine stufenförmige Ausbildung aufweist, die in eingeschwenkter Lage des Rohrsegmentes in eine analoge Stufenausbildung an der anderen Längskante des Rohres oder an der freien Randkante des an der anderen Längsrandkante des Rohres angelenkten Rohrsegmentes eingefügt ist, so daß sich eine stufenlose Umfangskontur (innen und außen) ergibt.

Zudem kann vorgesehen sein, daß die Anlenkstelle des Rohrsegmentes durch ein an der außenliegenden Randkante von Rohr und Rohrsegment gebildetes Filmscharnier gebildet ist.

Auch kann bevorzugt sein, daß die innenliegende Randkante von Rohr und/oder Rohrsegment im der Anlenkstelle benachbarten Bereich einen Vorsprung aufweist, so daß der Innenmantel bei in Schließlage befindlichem Rohrsegment stufenlos ausgebildet ist.

Durch diese Anordnung ist einerseits die gute Zugänglichkeit des Rohrinneren durch den Längsschlitz bei aufgeschwenktem Rohrsegment gewährleistet, andererseits aber bei eingeschwenktem Rohrsegment eine die eingelegten Kabel allseitig umfassende Rohrausbildung erreicht, wobei die Schließlage der Rohrsegmente dadurch gesichert ist, daß das Rohr in eine Lage relativ zur Kabelschelle gedreht ist, in der das Rohrsegment von Teilen der Kabelschelle außenseitig umfaßt ist.

Ein bevorzugtes Verfahren zur Installation von Kabeln in geschlitzten Rohren, die in Kabelschellen drehbar gehalten sind, gemäß Kabelverlegesystem nach einem der Ansprüche 1 bis 7, wird darin gesehen, daß die in den Kabelschellen drehbar gehaltenen Rohre in eine Lage um ihre Längsachse gedreht werden, in der der Längsschlitz frei zugänglich ist, daß das oder die Kabel durch den Längsschlitz in das Rohr eingelegt werden und daß anschließend das Rohr in eine Lage gedreht wird, in der der Längsschlitz von Bestandteilen der Kabelschellen im Bereich der Anordnung der Kabelschellen verdeckt wird.

Dabei ist bevorzugt vorgesehen, daß das Rohr nach dem Einlegen der Kabel in eine Lage gedreht wird, in der der Schlitz zwar im Bereich der Anordnung der Kabelschellen durch Bestandteile der Kabelschellen verdeckt wird, aber der Schlitz nicht in Richtung der Erdschwere vom Installationsort nach unten gerichtet wird.

Ausführungsbeispiele der Erfindung sind in der Zeichnung dargestellt und im folgenden näher beschrieben.

Es zeigt:

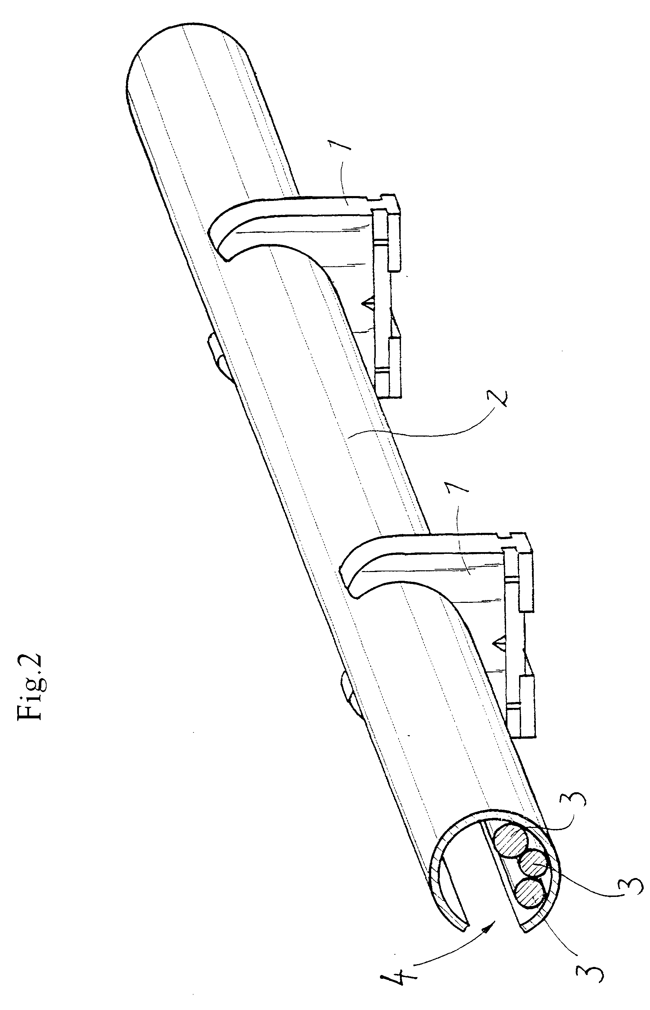

- Fig. 1 und 2: eine erste Ausführungsform in isometrischer Darstellung;

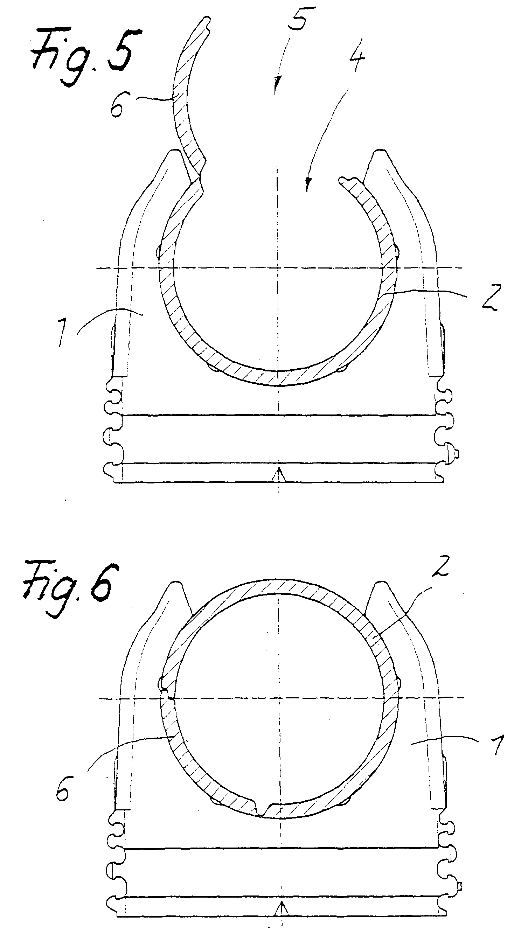

- Fig. 3 und 4: eine Einzelheit in Ansicht, teilweise geschnitten.
- Fig. 5 und 6: eine weitere Ausführungsform in Ansicht;
- Fig. 7 und 8: eine andere Ausführungsform.

In der Zeichnung ist das erfindungsgemäße Kabelverlegesystem erläutert. Es besteht aus Kabelschellen 1, die an einer Befestigungsebene z.B. an einer Wand oder Deckenfläche befestigt sind und gabelartige Arme aufweisen. Desweiteren besteht das System aus Rohren 2, die von verlegten Kabeln 3 axial durchsetzt sind und in die gabelartigen Rohrauflager der Kabelschellen eingerastet oder eingeklipst sind.

Jedes Rohr 2 weist einen durchgehenden Längsschlitz 4 auf. Ferner ist jedes Rohr 2 in den Kabelschellen 1 drehbar gehalten. Der Längsschlitz 4 weist vorzugsweise eine Schlitzweite auf, die dem Durchmesser eines einzulegenden Kabels 3 entspricht oder auch gering kleiner oder vorzugsweise größer ist als der Kabeldurchmesser. Es können auch Kabel unterschiedlicher Durchmesser in das Rohr 2 eingelegt werden. Der lichte Innendurchmesser des Rohres 2 entspricht einem Vielfachen des Durchmessers der eingelegten Kabel 3, so daß eine Vielzahl von Kabeln 3 in das entsprechende Rohr 2 einlegbar ist.

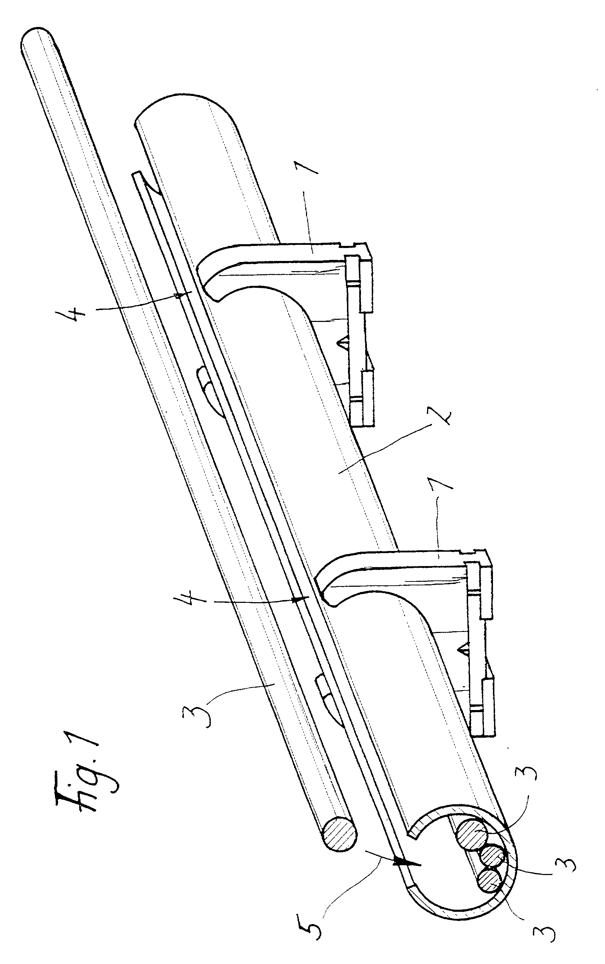

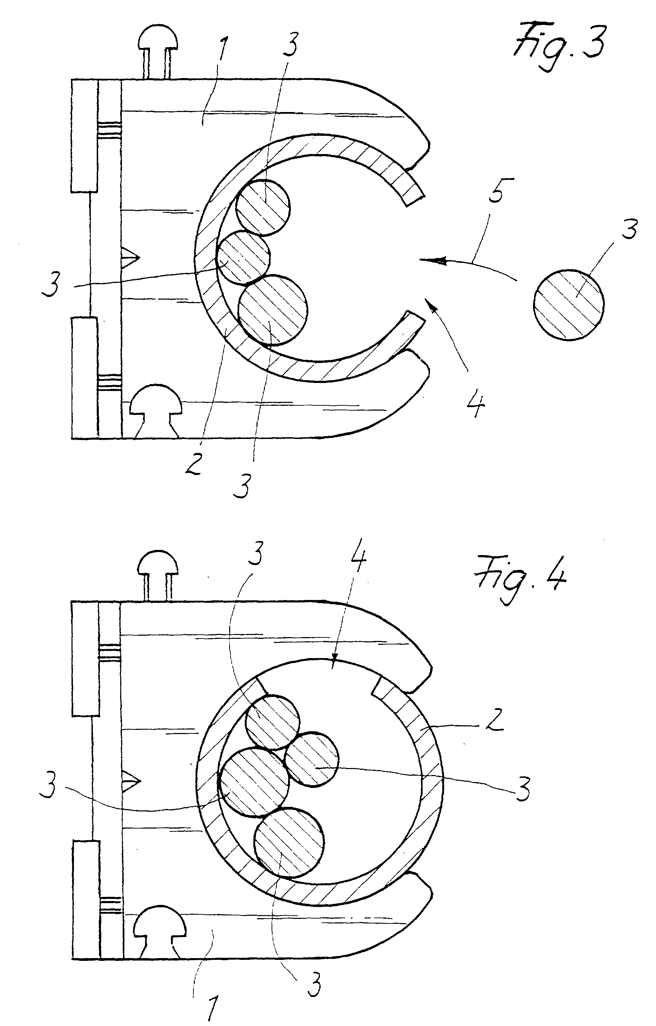

Das Verfahren zur Installation von Kabeln 3 in geschlitzten Rohren 2, die in Kabelschellen 1 drehbar gehalten sind, besteht darin, daß die in den Kabelschellen 1 drehbar gehaltenen Rohre 2 in eine Lage um ihre Längsachse gedreht werden, in der der Längsschlitz 4 frei zugänglich ist, wie beispielsweise in Figur 1 oder Figur 3 gezeigt ist. Der Längsschlitz ist dabei nicht durch Bestandteile der Kabelschellen 1 verdeckt.

Anschließend können die Kabel 3 durch den Längsschlitz 4 entsprechend dem Bewegungspfeil 5 in das Rohr eingelegt werden. Nachfolgend wird das Rohr 2 in eine Lage gedreht, in der der Längsschlitz 4 von Bestandteilen der Kabelschellen 1 im Bereich von deren Anordnung verdeckt wird. Vorzugsweise wird das Rohr 2 in eine solche Lage gedreht, in der der Schlitz 4 zwar im Bereich der Anordnung der Kabelschellen durch deren Bestandteile verdeckt wird, aber der Schlitz 4 nicht in Richtung der Erdschwere vom Installationsort nach unten gerichtet wird. Hierdurch wird erreicht, daß die eingelegten Kabel 3 in der Montagesollage durch das Rohr 2 gestützt und gehalten sind, wobei der Installationsschlitz 4 aber durch Bestandteile der Schellen 1 in deren Anordnungsbereich abgedeckt ist.

Die Erfindung stellt ein äußerst einfach bedienbares Verlegesystem zur Verfügung, welches in einfacher Weise die nachträgliche Anordnung von Kabeln 3 in den entsprechenden Schutzrohren 2 ermöglicht.

Um zu vermeiden, daß die eingelegten Kabel aus dem Schlitz 4 des Rohres 2 austreten können sind gemäß Figur 5 bis 8 Rohrsegmente 6 an einer oder beiden Längsrandkanten des Rohres 2 angelenkt (mittels Filmscharnier).

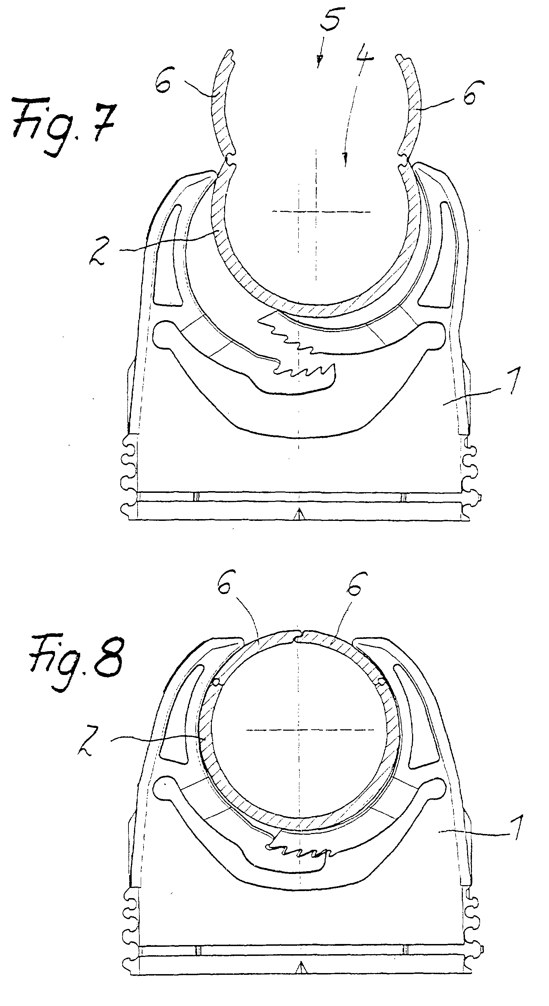

Zum Zuführen von Leitungen sind die Rohrsegmente 6 aufgeschwenkt, wie in Figur 5 und 7 gezeigt ist. Anschließend werden die Rohrsegmente 6 eingeschwenkt und das Rohr 2 wird in eine Lage analog Figur 6 oder 8 gedreht. Dadurch sind die Rohrsegmente 6 durch die Gabeln der Kabelschelle 1 arretiert und können nicht aufschwenken.

Es ist somit ein über seine Länge geschlossenes Rohr 2 gebildet. Die eingelegten Kabel können nicht aus dem Schlitz austreten.

Bei einer an sich bekannten Kabelschelle 1 gemäß Figur 7 und 8 wird das Rohr 2 nach dem Einlegen der Kabel in den Längsschlitz analog Figur 7 in die Kabelschelle 1 gedrückt, wobei die Gabelarme der Schelle sich elastisch aufweiten und in Sollposition analog Figur 8 das Rohr 2 bis über einen Teil seines Längsschlitzes 4 reichend umfassen. Dabei werden die beiden Rohrsegmente 6 aus der aufgeschwenkten Lage in die Schließlage gezwungen. Der Längsschlitz 4 des Rohres 2 ist somit auch ohne Drehung um die Längsachse sicher verschlossen.

Die Erfindung ist nicht auf das Ausführungsbeispiel beschränkt sondern im Rahmen der Offenbarung in Verbindung mit den Patentansprüchen vielfach variabel.

Alle neuen, in der Beschreibung und/oder Zeichnung offenbarten Einzel- und Kombinationsmerkmale werden als erfindungswesentlich angesehen.

## Patentansprüche

1. Kabelverlegesystem, bestehend aus Kabelschellen, die an einer Befestigungsebene (z.B. Wand oder Decke) befestigt sind, sowie Rohren, die von den verlegten Kabeln axial durchsetzt sind und in die Kabelschellen mit gabelartigem Rohrauflager eingerastet oder eingeklipst sind, **dadurch gekennzeichnet, daß** jedes Rohr (2) einen durchgehenden Längsschlitz (4) aufweist und daß das Rohr (2) in den Kabelschellen (1) drehbar gehalten ist.

2. Kabelverlegesystem nach Anspruch 1, **dadurch gekennzeichnet, daß** der Längsschlitz (4) eine Schlitzweite hat, die dem Durchmesser eines eingelegten Kabels (3) entspricht oder gering kleiner oder größer ist als der Kabeldurchmesser.

3. Kabelverlegesystem nach Anspruch 1 oder 2, **dadurch gekennzeichnet, daß** der lichte Innendurchmesser des Rohres (2) ein Vielfaches des Durchmessers der eingelegten Kabel (3) beträgt.

4. Kabelverlegesystem nach einem der Ansprüche 1 bis 3, **dadurch gekennzeichnet, daß** an mindestens einer Längsrandkante des Rohres (2) ein Rohrsegment (6) anscharniert oder angelenkt ist, welches in eine den Längsschlitz (4) freigebende Zuführlage und in eine den Längsschlitz (4) schließende, das Rohr (2) zu einem geschlossenen Rohr (2) ergänzende Lage schwenkbar ist.

5. Kabelverlegesystem nach Anspruch 4, **dadurch gekennzeichnet, daß** das an einer Längsrandkante des Rohres (2) angelenkte Rohrsegment (6) an seiner der Anlenkstelle abgewandten Randkante eine stufenförmige Ausbildung aufweist, die in eingeschwenkter Lage des Rohrsegmentes (6) in eine analoge Stufenausbildung an der anderen Längskante des Rohres (2) oder an der freien Randkante des an der anderen Längsrandkante des Rohres (2) angelenkten Rohrsegmentes (6) eingefügt ist, so daß sich eine stufenlose Umfangskontur (innen und außen) ergibt.

6. Kabelverlegesystem nach einem der Ansprüche 4 oder 5, **dadurch gekennzeichnet, daß** die Anlenkstelle des Rohrsegmentes (6) durch ein an der außenliegenden Randkante von Rohr (2) und Rohrsegment gebildetes Filmscharnier gebildet ist.

7. Kabelverlegesystem nach Anspruch 6, **dadurch gekennzeichnet, daß** die innenliegende Randkante von Rohr (2) und/oder Rohrsegment (6) im der Anlenkstelle benachbarten Bereich einen Vorsprung aufweist, so daß der Innenmantel bei in Schließlage befindlichem Rohrsegment (6) stufenlos ausgebildet ist.

8. Verfahren zur Installation von Kabeln in geschlitzten Rohren, die in Kabelschellen drehbar gehalten sind, gemäß Kabelverlegesystem nach einem der Ansprüche 1 bis 3, **dadurch gekennzeichnet, daß** die in den Kabelschellen (1) drehbar gehaltenen Rohre (2) in eine Lage um ihre Längsachse gedreht werden, in der der Längsschlitz (4) frei zugänglich ist, daß das oder die Kabel (3) durch den Längsschlitz (4) in das Rohr (2) eingelegt werden und daß anschließend das Rohr (2) in eine Lage gedreht wird, in der der Längsschlitz (4) von Bestandteilen der Kabelschellen (1) im Bereich der Anordnung der Kabelschellen (1) verdeckt wird.

9. Verfahren nach Anspruch 8, **dadurch gekennzeichnet, daß** das Rohr (2) nach dem Einlegen der Kabel (3) in eine Lage gedreht wird, in der der Schlitz (4) zwar im Bereich der Anordnung der Kabelschellen (1) durch Bestandteile der Kabelschellen (1) verdeckt wird, aber der Schlitz (4) nicht in Richtung der Erdschwere vom Installationsort nach unten gerichtet wird.

## Claims

1. A cable installation system, consisting of cable grips (1) which are fixed to an attachment plane (e.g. wall or ceiling), and also pipes through which the installed cables axially pass and which are locked or clipped into the cable grips with a fork-type pipe support,
**characterised in that** each pipe (2) comprises a continuous longitudinal slot (4)
**and in that** the pipe (2) is rotatably held in the cable grip (1).

2. A cable installation system according to Claim 1,
**characterised in that** the longitudinal slot (4) has a slot width which corresponds to the diameter of an inserted cable (3) or is slightly smaller or larger than the cable diameter.

3. A cable installation system according to Claim 1 or 2,
**characterised in that** the clear internal diameter of the pipe (2) is a multiple of the diameter of the inserted cables (3).

4. A cable installation system according to one of Claims 1 to 3,
**characterised in that** a pipe segment (6), which can swivel into a feed position uncovering the longitudinal slot (4) and into a position closing the longitudinal slot (4) and completes the pipe (2) to form a closed pipe (2), is hinged or articulated on at least one longitudinal edge of the pipe (2).

5. A cable installation system according to Claim 4,
**characterised in that** the pipe segment (6) articulated at one longitudinal edge of the pipe (2) comprises a step-shaped formation at its edge remote from the articulation point, which in the swivelled- in position of the pipe segment (6) is inserted into a similar stepped formation on the other longitudinal edge of the pipe (2) or on the free edge of the pipe segment (6) articulated on the other longitudinal edge of the pipe (2) so that a smooth peripheral contour (inside and outside) is produced.

6. A cable installation system according to one of Claims 4 or 5,
**characterised in that** the articulation site of the pipe segment (6) is formed by an integral hinge formed at the outer edge of pipe (2) and pipe segment.

7. A cable installation system according to Claim 6,
**characterised in that** the inner edge of the pipe (2) and/or pipe segment (6) comprises a projection in the region adjacent to the articulation site, so that the inner surface has a smooth construction when the pipe segment (6) is situated in the closed position.

8. A method for the installation of cables in slit pipes which are rotatably held in cable grips, in accordance with the cable installation system according to one of Claims 1 to 3,
**characterised in that** the pipes (2) which are rotatably held in the cable grips (1) are rotated around their longitudinal axis into a position in which the longitudinal slot (4) is freely accessible,
**in that** the cable or cables (3) are inserted though the longitudinal slot (4) into the pipe (2)
**and in that** then the pipe (2) is rotated into a position in which the longitudinal slot (4) is hidden by components of the cable grips (1) in the region of the arrangement of the cable grips (1).

9. A method according to Claim 8,
**characterised in that** after the insertion of the cables (3), the pipe (2) is rotated into a position in which the slot (4) is in fact hidden in the region of the arrangement of the cable grips (1) by components of the cable grips (1), but the slot (4) is not downwardly directed in the direction of gravity from the installation site.

## Revendications

1. Système pour poser des câbles composé de colliers de fixation (1) qui sont fixés à un support plan (par exemple au mur ou au plafond), ainsi que des tubes qui sont traversés axialement par les câbles qui y sont posés, et qui sont enclenchés ou encliquetés dans les colliers de fixation munis d'un support de tube semblable à une fourche, **caractérisé en ce que** chaque tube (2) présente une fente longitudinale ininterrompue (4) et **en ce que** le tube (2) est maintenu dans les colliers de fixation (1) de manière à pouvoir tourner.

2. Système pour poser des câbles selon la revendication 1, **caractérisé en ce que** la fente longitudinale (4) présente une largeur correspondant au diamètre d'un câble (3) qui est posé dans le tube, ou légèrement inférieure ou supérieure au diamètre dudit câble.

3. Système pour poser des câbles selon la revendication 1 ou 2, **caractérisé en ce que** le diamètre intérieur du tube (2) est un multiple du diamètre des câbles (3) qui y sont posés.

4. Système pour poser des câbles selon l'une des revendications 1 à 3, **caractérisé en ce que** sur au moins une arête longitudinale du bord du tube (2) est fixé au moyen d'une charnière ou de manière articulée un segment de tube (6) qui peut pivoter dans une position d'introduction libérant la fente longitudinale (4) et dans une position fermant la fente longitudinale (4) et complétant le tube (2) pour en faire un tube fermé (2).

5. Système pour poser des câbles selon la revendication 4, **caractérisé en ce que** le segment de tube (6) fixé de manière articulée sur une arête longitudinale du bord du tube (2) présente sur son arête du bord opposée au point d'articulation une configuration en escaliers qui, lorsque le segment de tube (6) est rentré, s'emboîte dans une configuration en escaliers analogue située sur l'autre arête longitudinale du tube (2) ou sur l'arête du bord libre du segment de tube (6) fixé de manière articulée sur l'autre arête longitudinale du bord du tube (2), de manière à obtenir une circonférence lisse à l'intérieur comme à l'extérieur.

6. Système pour poser des câbles selon la revendication 4 ou 5, **caractérisé en ce que** le point d'articulation du segment de tube (6) est constitué par une charnière en film formée sur l'arête extérieure du bord du tube (2) et du segment de tube.

7. Système pour poser des câbles selon la revendication 6, **caractérisé en ce que** l'arête intérieure du bord du tube (2) et/ou du segment de tube (6) présente dans la zone adjacente au point d'articulation une saillie, si bien que, lorsque le segment de tube (6) est en position fermée, l'enveloppe intérieure est lisse.

8. Procédé pour poser des câbles dans des tubes fendus qui sont maintenus dans des colliers de fixation de manière à pouvoir tourner conformément au système pour poser des câbles selon l'une des revendications 1 à 3, **caractérisé en ce que** l'on fait tourner autour de leur axe longitudinal les tubes (2) maintenus dans les colliers de fixation (1) de manière à pouvoir tourner dans une position dans laquelle la fente longitudinale (4) est accessible librement, **en ce que** le ou les câbles (3) sont posés dans le tube (2) au travers de la fente longitudinale (4), et **en ce qu'**ensuite on fait tourner le tube (2) dans une position dans laquelle la fente longitudinale (4) est recouverte par des parties des colliers de fixation (1) dans la zone où sont placés les colliers de fixation (1).

9. Procédé selon la revendication 8, **caractérisé en ce qu'**après avoir posé les câbles (3), on fait tourner le tube (2) dans une position dans laquelle la fente (4), tout en étant recouverte par des parties des colliers de fixation (1) dans la zone où sont placés les colliers de fixation (1), n'est pas dirigée vers le bas dans la direction de l'attraction terrestre du lieu d'installation.
